# EUROPEAN PATENT APPLICATION

(11) **EP 4 760 618 A1**
(43) Date of publication of application: **17.06.2026**
(21) Application number: 25222857.2
(22) Date of filing: 12.12.2025
(51) Int. Cl.: G06Q 20/20, G06Q 20/40, G07G 1/00, G07G 3/00, G06Q 10/087

(54) **SELF-SERVICE CHECKOUT TO REDUCE RISK OF SHOPLIFTING**

(30) Priority: 16.12.2024 US 202418982979
(71) Applicant: Datalogic IP Tech S.r.l., 40012 Calderara di Reno (BO) (IT)
(72) Inventor: D'ERCOLI, Francesco, 40131 Bologna (BO) (IT); POLI, Flavio, 38033 Cavalese (TN) (IT)
(74) Representative: Riccardi, Elisa

(57) **Abstract**

A system and method to evaluate transactions executed at self-server point-of-sale (POS) terminals located at retail stores with improved ability to identify potential shoplifting incidents. The service determines most stolen K items (MSKI) from a transaction history and shopping theft data of the retail store, where K is an integer value greater than one. The service generates a set of not stolen K items (NSKI) based on market basket analysis of the transaction history. The service defines suspect transaction classes based on the MSKI and the NSKI and generates an alert for a current transaction at the retail store when items in the current transaction match one of the suspect transaction classes.

## Description

### FIELD

The present application is directed to self-service point-of-sale terminal monitoring and using data-analysis for prediction of theft.

### BACKGROUND

Retail stores use self-service point-of-sale (POS) terminals that allow a shopper to scan and then pay for their shopping items. For the majority of customers this is a convenience that expedites the check-out process during busy times. However, certain customers take advantage of these self-service POS terminals to take items from the store without paying for them. Shoplifting, or "shrinkage" as it is known in the retail industry, is exacerbated by self-service POS terminals. Certain retailers that are worried by this type of shoplifting scale back or eliminate self-service POS terminals from certain higher risk stores. Solutions using cameras that monitor operation of each self-service POS terminal have been proposed; however, deployment at each self-service POS terminal significantly increases operational costs.

A store typically employs a control check where the contents of a shopper's basket is manually compared to a transaction record (e.g., till receipt) to determine whether there the basket includes items that were not scanned. Items not scanned may be due to a customer's mistakes or may be intentional.

### SUMMARY

A retail store may use software with hard-coded rules that determine the frequency of the control check for certain customers. For example, the software may adjust a rating of the customers based on whether missed items were found during the control, increasing the frequency of control checks for that customer when items were not scanned and decreasing the frequency of control checks for that customer when no missed items were found. However, such systems are inflexible.

Some disadvantages of current prior-art methods include: (1) systems where rules are hard coded in source code are difficult to update (e.g., to improve performances) and can only implement rules that are already known to the coder; (2) systems based on rules are not easily customized for different points of sale of the same customer where different theft patterns or different good stolen occur, since the one-size-fits-all model doesn't work well; and (3) rule-based systems are not easily scalable to fit different needs.

Benefits of the embodiments herein address these deficiencies and provide advantages such as theft reduction for the end customer of the self-shopping system (e.g., a company in the large-scale organized distribution such as Walmart^{™}, Carrefour^{™}, etc.).

In certain embodiments, the techniques described herein relate to a method to evaluate transactions executed at self-server (sometimes referred to as self-service) point-of-sale (POS) terminals located at retail stores with improved ability to identify potential shoplifting incidents, including: determining most stolen K items (MSKI) from a transaction history and shopping theft data of the retail store, where K is an integer value greater than one; generating a set of not stolen K items (NSKI) based on market basket analysis of the transaction history; defining suspect transaction classes based on the MSKI and the NSKI; generating an alert for a current transaction at the retail store when items in the current transaction match one of the suspect transaction classes.

The acts of determining MSKI, generating the set of NSKI, and defining suspect transaction classes may be implemented for each of a plurality of timeslots, wherein the act of generating the alert may use the MSKI and the NSKI of the timeslot associated with a time of the current transaction.

Alternatively or additionally, generating the set of NSKI may comprise performing a market basket analysis algorithm on the transaction history to determine the NSKI.

Alternatively or additionally, generating the set of NSKI may comprise extracting patterns of associated items that include at least one item of MSKI.

The acts of generating the set of NSKI and defining suspect transaction classes may comprise extracting the patterns based on a scan sequence of items defined in the transaction history and corresponding shopping theft data.

Alternatively or additionally, the market basket analysis algorithm may limit the items examined to the K most stolen items.

Alternatively or additionally, the acts of determining MSKI, generating the set of NSKI, and defining suspect transaction classes may be implemented for each of a plurality of point-of-sale terminal locations with the retail store, wherein the act of generating the alert may use the MSKI and the NSKI of the point-of-sale terminal location associated with the current transaction.

Alternatively or additionally, generating the alert may comprise:
determining a minimum distance between the current transaction and each pattern of NSKI;
generating a first class alert when the minimum distance is less than a threshold distance value and the current transaction does not include any item of the MSKI; and
generating a second class alert when the distance is below the threshold value and the current transaction includes at least one item of the MSKI with a multiplicity greater than a corresponding MSKI threshold.

The method may further comprise determining the current transaction is not suspicious when the distance is greater than the threshold distance.

Alternatively or additionally, the generation of either the first class alert or the second class alert may classify the current transaction as suspicious.

The method may further comprise repeating at intervals the acts of determining MSKI, generating the set of NSKI, and defining suspect transaction classes.

The acts of determining MSKI, generating the set of NSKI, and defining suspect transaction classes may be implemented as a batch process.

The method may further comprise sending the alert to activate a device at the retail store.

In certain embodiments, the techniques described herein relate to a system to evaluate transactions executed at self-server point-of-sale (POS) terminals located at retail stores with improved ability to identify potential shoplifting incidents, including: a database for storing a transaction history and shopping theft data of the retail store; a self-shopping POS terminal located at the retail store; a service implemented by a processor and memory storing machine-readable instructions that when executed by the processor cause the service to: determine most stolen K items (MSKI) from the transaction history and the shopping theft data, where K is an integer value greater than one; generate a set of not stolen K items (NSKI) based on market basket analysis of the transaction history; define suspect transaction classes based on the MSKI and the NSKI; generate an alert for a current transaction at the retail store when items in the current transaction of the self-shopping POS terminal match one of the suspect transaction classes.

The system may further comprise machine-readable instructions that when executed by the processor cause the service to determine the MSKI, generate the NSKI, and define the suspect transaction classes for each of a plurality of timeslots, wherein the machine-readable instructions for generating the alert may use the MSKI and the NSKI of the timeslot associated with a time of the current transaction.

Alternatively or additionally, the system may further comprise machine-readable instructions that when executed by the processor cause the service to perform a market basket analysis algorithm on the transaction history to determine the NSKI.

The system may further comprise machine-readable instructions that when executed by the processor cause the service to extract patterns of associated items that include at least one item of MSKI to define the NSKI.

The system may further comprise machine-readable instructions that when executed by the processor cause the service to extract the patterns based on a scan sequence of items defined in the transaction history and corresponding shopping theft data to define the NSKI.

Alternatively or additionally, the system may further comprise machine-readable instructions that when executed by the processor cause the service to send the alert to activate a device at the retail store.

Alternatively or additionally, the service may be implemented in a cloud-based system.

### BRIEF DESCRIPTION OF THE FIGURES

In the drawings, identical reference numbers identify similar elements or acts. The sizes and relative positions of elements in the drawings are not necessarily drawn to scale. For example, the shapes of various elements and angles are not drawn to scale, and some of these elements are arbitrarily enlarged and positioned to improve drawing legibility. Further, the particular shapes of the elements as drawn, are not intended to convey any information regarding the actual shape of the particular elements, and have been solely selected for ease of recognition in the drawings.
FIG. 1 is a schematic diagram illustrating one example service to evaluate transactions executed at self-server point-of-sale (POS) terminals located at retail stores with improved ability to identify potential shoplifting incidents, in embodiments.
FIG. 2 is a block diagram illustrating the service of FIG. 1 in further example detail, in embodiments.
FIG. 3 is a flowchart illustrating one example method for generating a set of not stolen K items (NSKI) and classes, in embodiments.
FIG. 4 is a flowchart illustrating one example method for monitoring a current transaction for potential fraud, in embodiments.
FIGs. 5A, 5B, 6A, 6B, 7A, 7B, 8A, and 8B show one example implementation of service of FIG. 1 using the Python programming language with the "pandas", "numpy", and "mlxtend" libraries and with example output, in embodiments.

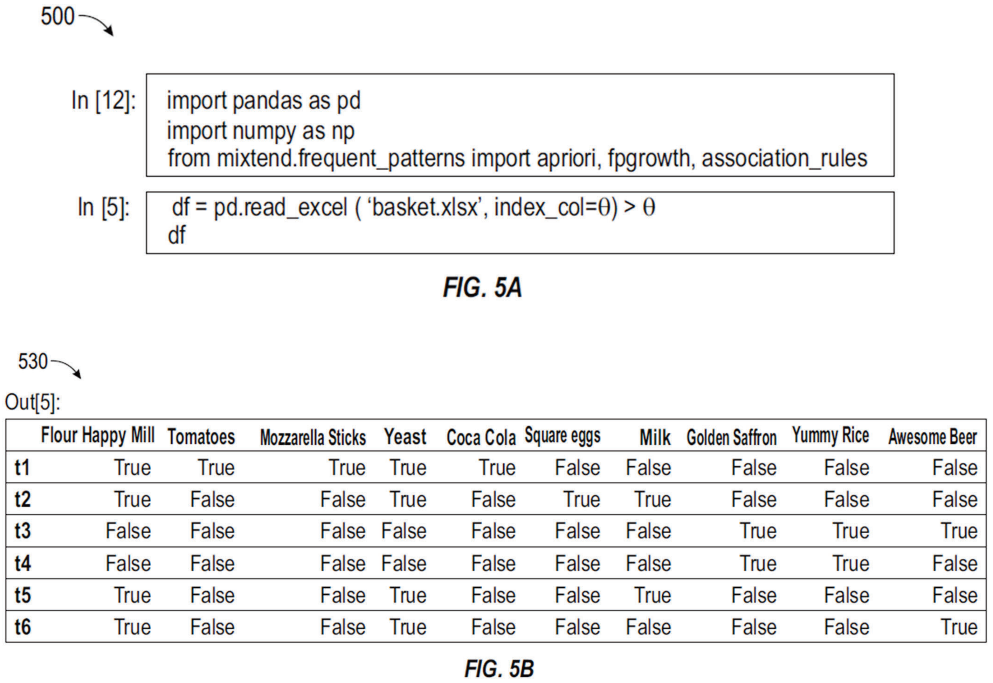

FIG. 5A shows example Python code for loading the needed libraries and importing example data from an excel spreadsheet named "basket.xlsx" into a DataFrame called "df".
FIG. 5B shows example output data from DataFrame "df".

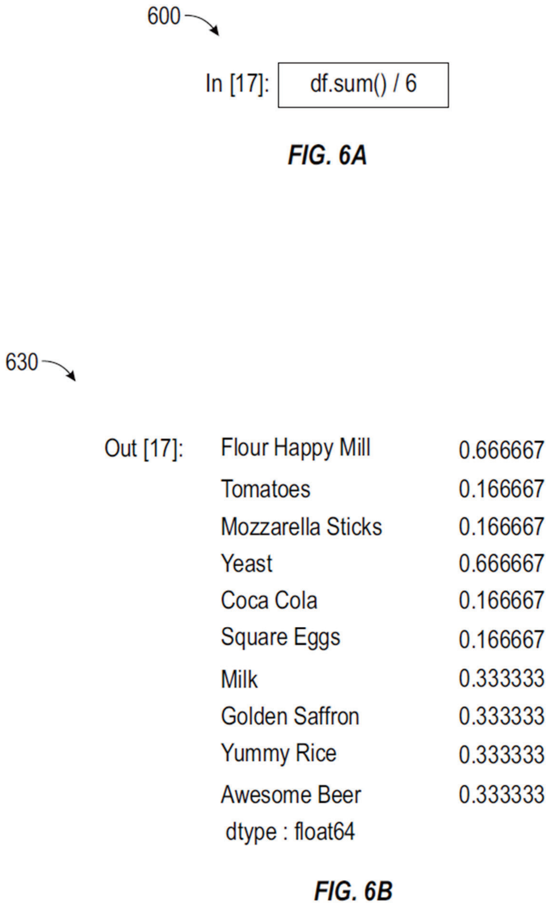

FIG. 6A shows example Python code for generating frequency data for DataFrame "df".
FIG. 6B shows example data output of the frequency data generated by Python code of FIG. 6A.

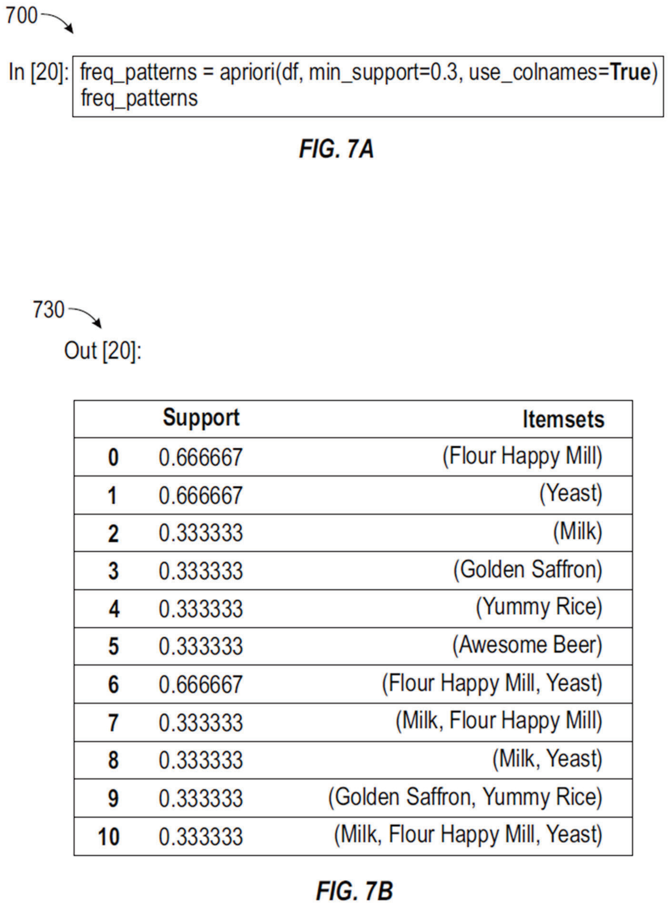

FIG. 7A shows example Python code for creating a DataFrame "frequency _patterns" using the *Apriori* algorithm from the "mlxtend" library on the DataFrame "df".
FIG. 7B shows example output data of the DataFrame "frequency_patterns" of FIG. 7A.

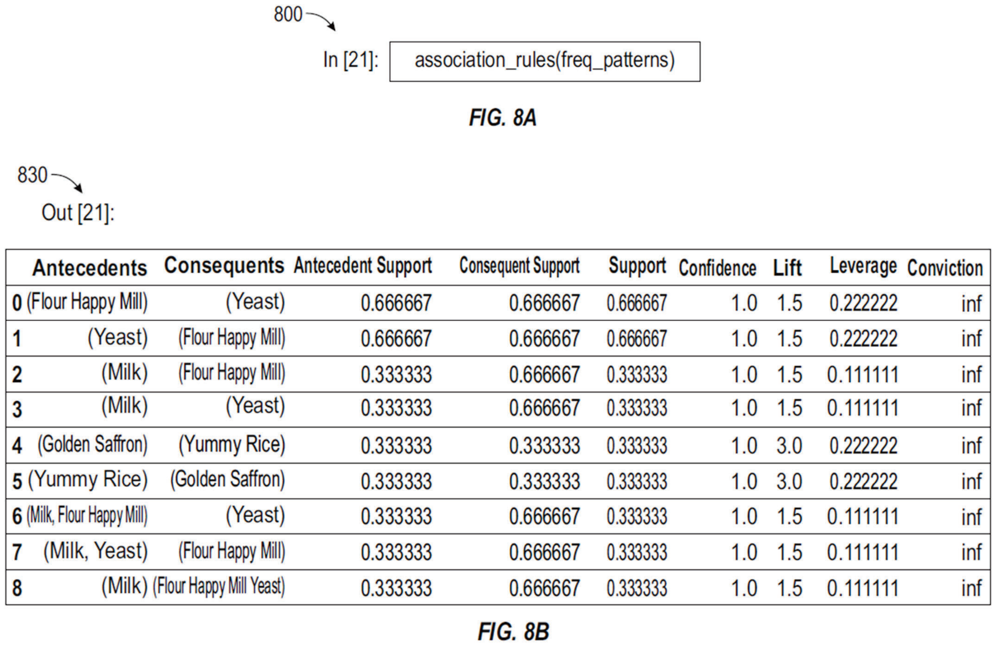

FIG. 8A shows example Python code for generating association rules from the DataFrame "frequency_patterns" of FIGs. 7A and 7B.
FIG. 8B shows example output data of the association rules generates by Python code of FIG. 8A.

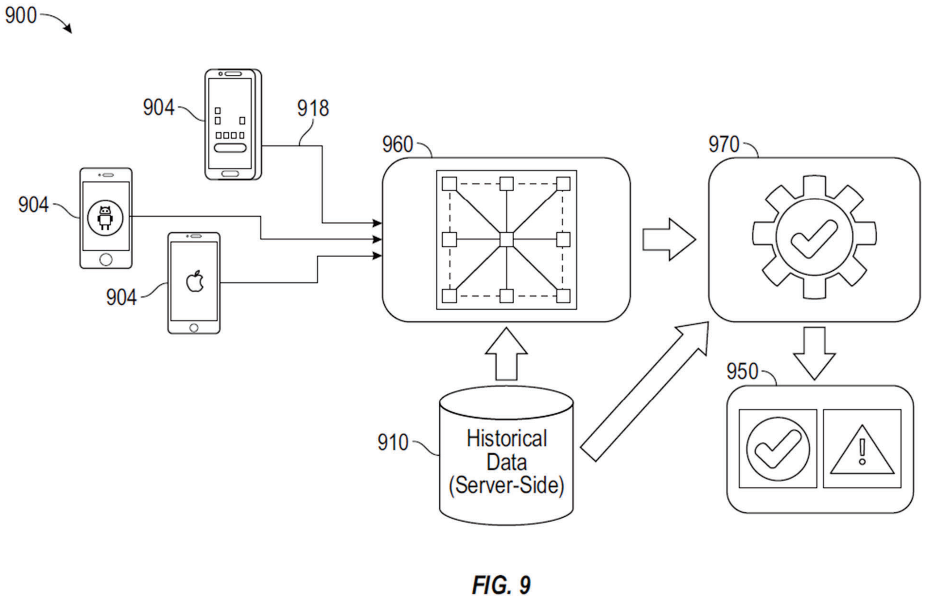

FIG. 9 is a schematic diagram illustrating one example machine-learning service to evaluate transactions executed at self-server point-of-sale (POS) terminals located at retail stores with improved ability to identify potential shoplifting incidents, in embodiments.

### DETAILED DESCRIPTION OF THE EMBODIMENTS

In the following description, certain specific details are set forth in order to provide a thorough understanding of various disclosed embodiments. However, one skilled in the relevant art will recognize that embodiments may be practiced without one or more of these specific details, or with other methods, components, materials, etc. In other instances, well-known structures associated with scanners, safety laser scanners, computers, processors (hardware processors) memory or other storage have not been shown or described in detail to avoid unnecessarily obscuring descriptions of the various implementations and embodiments.

Unless the context requires otherwise, throughout the specification and claims which follow, the word "comprise" and variations thereof, such as, "comprises" and "comprising" are to be construed in an open, inclusive sense that is as "including, but not limited to."

Reference throughout this specification to "one implementation" or "an implementation" or "one embodiment" or "an embodiment" means that a particular feature, structure or characteristic described in connection with the embodiment is included in at least one implementation or embodiment. Thus, the appearances of the phrases "one implementation" or "an implementation" or "in one embodiment" or "in an embodiment" in various places throughout this specification are not necessarily all referring to the same implementation or embodiment. Furthermore, the particular features, structures, or characteristics may be combined in any suitable manner in one or more implementations or one or more embodiments.

As used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

### Reducing Self-Shopping Shoplifting

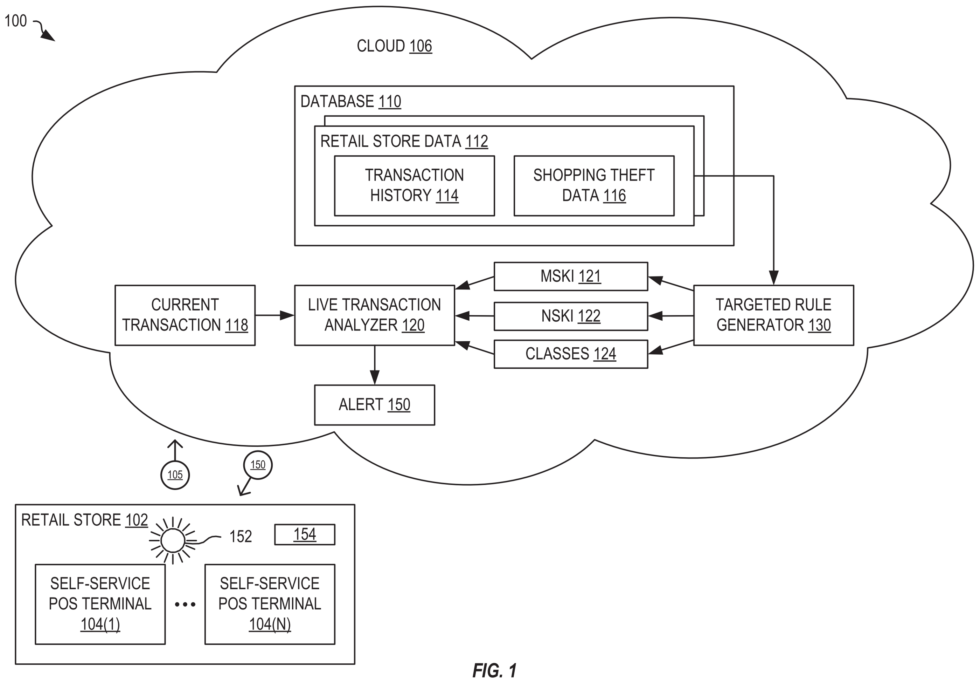

FIG. 1 is a schematic diagram illustrating one example service 100 to evaluate transactions executed one or more self-server point-of-sale (POS) terminals 104(1)-104(N) (collectively "104") located at retail stores 102 with improved ability to identify potential shoplifting incidents, in embodiments. Use of the self-shopping POS terminal 104 may also be referred to as a self-shopping application, self-service shopping, or self-service application. In certain embodiments, self-service POS terminal 104 is a terminal with in-App payment capabilities. In other embodiments, self-service POS terminal 104 scans items and a final payment is performed by a standard self-pay POS. In the example of FIG. 1, service 100 is provided via the cloud 106; however, service 100 may also be implemented in one or both of a remote server and an on-site server without departing from the scope hereof. For example, service 100 may be implemented by a server of a retail store chain. Service 100 is implemented by at least one processor and memory storing machine-readable instructions (e.g., software) that when executed by the processor perform the functionality described herein.

A retail store 102 has at least one self-service POS terminal 104 that is used by customers of retail store 102 to self-scan and pay for retail items (e.g., groceries). Self-service POS terminal 104 includes a scanner (also referred to as a "code reader" or "reader") that reads machine-readable symbols (e.g., one-dimensional coding symbologies for instance barcode symbols or two-dimensional coding symbologies for instance Matrix or QR symbols) that are carried by or on the retail items. Scanners implemented at POS terminals 104 often include an in-counter scanner having multiple scan windows (e.g., a bioptic scanner), a single plane scanner having a single scan window oriented along a single plane, and/or other peripheral scanners such as handheld scanners, presentation scanners, or other complementary features to assist in the checkout process. For example, the customer moves retail items from a basket area, across the scanner, and into a bagging area and self-service POS terminal 104 generate a transaction that includes the scanned retail items. Self-service POS terminal 104 may also include weight sensing technology that compares a detected weight increase in the bagging area to a predefined weight of an item being scanned, whereby a mismatch indicates a potential shoplifting attempt or an error made by the customer.

Service 100 improves on conventional shoplifting detection techniques implemented at self-service POS terminal 104 to reduce the risk of shoplifting without detection. For example, a conventional POS terminal indicates potential fraud when a weight increase at a bagging area of the POS terminal is different from a defined weight of a scanned item. The present embodiments determine a distance between items in a current transaction to items in classes that correspond to fraud based on historical transactions and shopping theft data of the retail store. Advantageously, service 100 generates an alert to indicate potential shoplifting even when self-service POS terminal does not detect anomalies.

Cloud 106 implements a database 110 that maintains retail store data 112 of retail store 102 that includes a transaction history 114. Transaction history 114 includes all completed transactions made by self-service POS terminals 104 at retail store 102.

As the customer scans each item at self-service POS terminal 104, self-service POS terminal 104 sends scan data 105 (e.g., scanned information of the item) to a live (i.e., real-time) transaction analyzer 120 of cloud 106. Live transaction analyzer 120 maintains a current transaction 118 of self-service POS terminal 104, adding scan data 105 thereto as received. Current transaction 118 may be part of existing cloud services for operation of self-service POS terminal 104. For example, live transaction analyzer 120 may be added to transaction service of self-service POS terminal 104. Scan data 105 may include an item number, an item description, a quantity, and other transactional information.

As shown in FIG. 1, shopping theft data 116 of retail store 102 is also stored in retail store data 112 and defines item theft from retail store 102. Cloud 106 also implements a targeted rule generator 130 that processes, at intervals (e.g., once per day, weekly, etc.), transaction history 114 and shopping theft data 116 to generate most stolen K items 121 (MSKI 121), which is a list or set of most stolen items from retail store 102, to generate not stolen K items 122 (NSKI 122), which is a set of transactions that include at least one item in MSKI 121 but indicate a combination of items with a low probability of theft, and to generate a plurality of classes 124, which define conditions of a transaction where theft may occur. The MSKI 121 may be customized for a particular retail store 102. Targeted rule generator 130 is software (e.g., machine-executable instructions stored in non-transitory memory and executed by a processor) that may implement multiple algorithms to process transaction history 114 and shopping theft data 116 to identify patterns for NSKI 122 and classes 124. NSKI 122, classes 124, and targeted rule generator 130 are described in further detail below.

Live transaction analyzer 120 evaluates current transaction 118 against NSKI 122 and classes 124 that, when matched by live transaction analyzer 120 to current transaction 118, indicate that current transaction 118 is a suspect transaction. Each transaction of NSKI 122 is derived from transaction history 114 and includes items with strong associations where at least one of the items is also in MSKI 121. However, since NSKI 122 is derived from transaction history 114, these transactions define examples of transactions with a low probability of being suspected of scan avoidance. Accordingly, any transaction that is similar to a transaction in NSKI 122, but does not include the corresponding item also included in MSKI 121, is suspect.

In certain embodiments, live transaction analyzer 120 is implemented in a computer system of self-service POS terminal 104, whereby NSKI 122 and classes 124 are sent to self-service POS terminal 104 such that live transaction analyzer 120 may monitor 118 at self-service POS terminal 104. NSKI 122 and classes 124 allow live transaction analyzer 120 to detect when current transaction 118 should be flagged for post-checkout control (e.g., a manual check of a shopping basket for unscanned items).

A dishonest customer avoids scanning items at self-service POS terminal 104 when transferring them from a pre-scan area (e.g., a shopping basket used to collect the items in retail store 102) to a post-scan area (e.g., a bagging area or second basket). In a first scenario, the dishonest customer moves two associated items (e.g., flour and yeast) from the pre-scan area, past the scanner, and into the post-scan area in a way that only one of the items is scanned. In another scenario, the dishonest customer moves two of the same item from the pre-scan area, past the scanner, and into the post-scan area in a way that only one of the items is scanned. In this scenario, the dishonest customer is hoping that the unscanned item will not be noticed amongst the scanned items. Thus, the stolen items are often related to scanned items. NSKI 122 and classes 124 are generated to allow these potential scenarios to be identified during the self-checkout. When such a scenario is identified, live transaction analyzer 120 generates an alert 150 such that security personnel at retail store 102 may perform a post checkout control of the customer's basket against the transaction (e.g., receipt). Alert 150 may identify self-service POS terminal 104 and may include details of current transaction 118 including the reasons for generating the alert 150 (e.g., potential items not scanned) to assist in performing the post checkout control.

Alert 150 may be one or more of a discreet message (e.g., text, notification, etc.) to security or other store personnel at retail store 102, to activate a light 152, possibly flashing, at self-service POS terminal 104, to activate a device 154 such as a barrier near self-service POS terminal 104 that closes to direct the customer to a security control area, and so on. In some embodiments, the alert may suspend the transaction after scanning is selected by the user as "complete," but prior to payment, to perform checkout control prior to fully completing the transaction via payment. The checkout control may be at the self-service POS terminal 104 for the store personnel to check the customer's basket against the transaction log recorded by the POS terminal 104, after which the transaction may be fully completed upon being cleared by store personnel. A type of alert 150 and remedial actions taken may be selected based on retail store 102, for example.

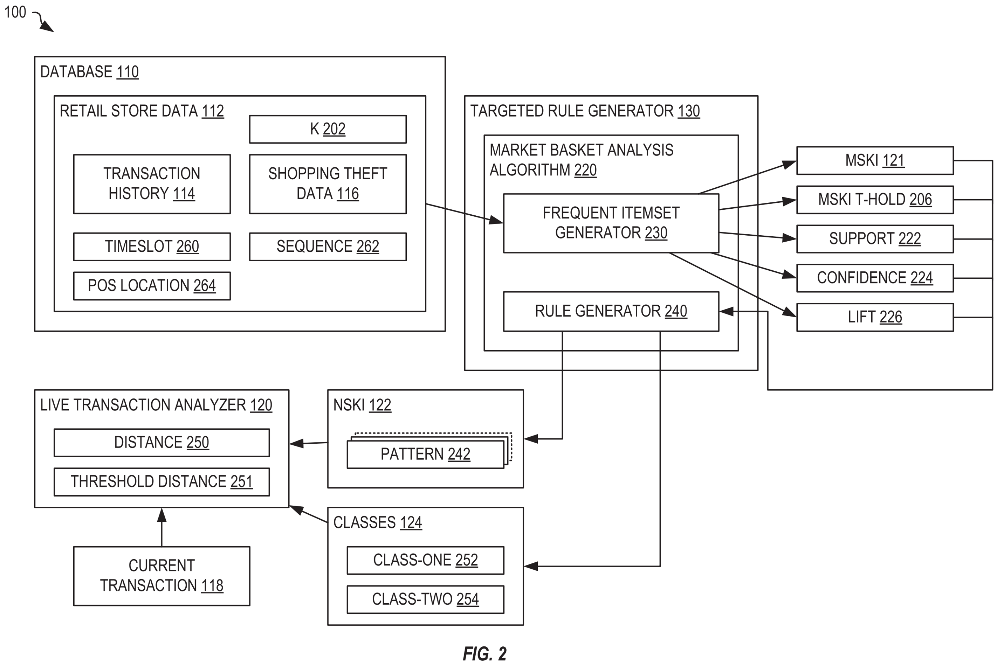

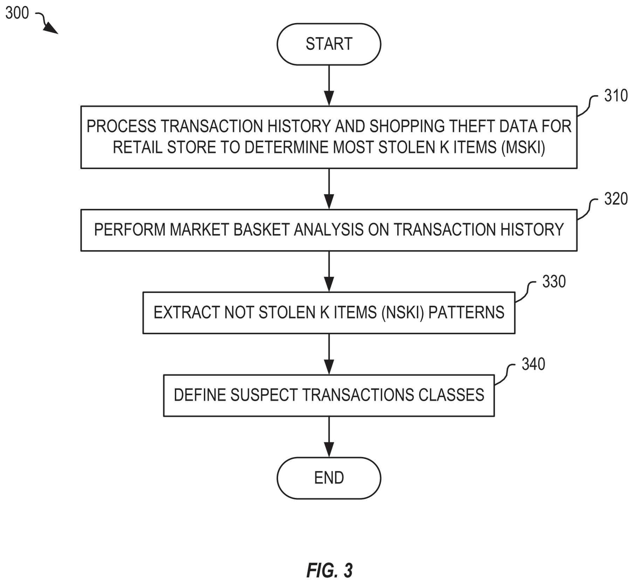

FIG. 2 is a block diagram illustrating service 100 of FIG. 1 in further example detail, in embodiments. FIG. 3 is a flowchart illustrating one example method 300 for generating NSKI 122 and classes 124, in embodiments. Method 300 is implemented in targeted rule generator 130 of FIG. 1, for example. FIGs. 2 and 3 are described together with the following description.

Targeted rule generator 130 is invoked at intervals to generate NSKI 122 and classes 124 from transaction history 114 and shopping theft data 116 of retail store data 112 corresponding to retail store 102. In certain embodiments, targeted rule generator 130 is run as an overnight batch process. In other embodiments, targeted rule generator 130 is run as a weekly batch process. Other intervals may be used without departing from the scope hereof. In certain embodiments, targeted rule generator 130 is invoked in response to the outcome of random post-checkout control checks performed at retail store 102. For example, where the post-checkout control checks indicate a new item is being sold at retail store 102 is not being scanned.

K 202 is a scalability parameter (e.g., an integer configuration value that is greater than one) that defines a number of most stolen items to monitor. For example, an operator (e.g., manager of retail store 102) may set K 202 to ten, causing targeted rule generator 130 to determine the ten most stolen items and then to generate NSKI 122 and classes 124 corresponding to those ten most stolen items. Accordingly, live transaction analyzer 120 predicts whether a current transaction belongs to a dishonest customer who may not be scanning one of the ten most stolen items. That is, live transaction analyzer 120 identifies potential shoplifting.

Targeted rule generator 130 includes a market basket analysis algorithm 220 that is a modified version of an *Apriori* algorithm, known in the art. However, unlike a conventional *Apriori* algorithm, the market basket analysis algorithm 220 uses scalability parameter K 202 to focus its analysis on the most stolen items. Market basket analysis algorithm 220 includes a frequent itemset generator 230 and a rule generator 240.

In block 310, method 300 processes a transaction history and shopping theft data for a retail store to determine the most stolen K items. In one example of block 310, market basket analysis algorithm 220 invokes frequent itemset generator 230 to process transaction history 114 and shopping theft data 116 to determine most stolen K items 121 (MSKI 121), which is a list or set of K 202 most stolen items from retail store 102.

Frequent itemset generator 230 also determines an MSKI threshold 206 for each item in MSKI 121. MSKI threshold 206 defines how many of the items are usually purchased together. For example, a dishonest customer puts a certain number of items into their shopping cart, scanning only a subset of them, and attempting to use the multiplicity of items to hide the unscanned (e.g., stolen) items. MSKI thresholds 206 are used to identify this kind of dishonest customer behavior. In an example where shopping theft data 116 includes post-checkout control data that indicates five items were paid for but seven were in the customer's basket, MSKI threshold 206 is an average of the number paid for. Accordingly, where current transaction 118 an item that matches one of NSKI 122, and the number of such items in current transaction 118 matches the corresponding MSKI threshold 206, there is a determined possibility that one or more additional items were not scanned. That is, where current transaction 118 has a number of an item found in MSKI 121 where the number matches or exceeds MSKI threshold 206, the transactions is determined to be suspect. Where current transaction 118 closely matches one or more transactions in NSKI 122, current transaction 118 may also be considered an NSKI transaction.

In block 320, method 300 performs a market basket analysis on the transaction history across multiple transactions for a retail store or group of retail stores (e.g., chain). In one example of block 320, market basket analysis algorithm 220 invokes frequent itemset generator 230 to generate support 222, confidence 224, and lift 226. For each item, support 222 indicates a frequency of purchase, and is a value between 0 and 1. Confidence 224 defines a probability of item Y after item X. That is, confidence 224 defines the probability of item Y being purchased after item X is purchased first. Lift 226 defines a ratio between support 222 and confidence 224. For example, a lift of 2 indicates that the likelihood of buying item X and item Y together is twice that of buying item X without item Y. In the embodiments hereof, a lift of at least 1 is necessary for a rule to be considered relevant.

Advantageously, the computational weight of market basket analysis algorithm 220 (e.g., as compared to the conventional *Apriori* algorithm) may be reduced by limiting scalability parameter K 202, which thereby reduces the number of items to be examined. Frequent itemset generator 230 thereby generates support 222, confidence 224, and lift 226 that define many patterns (e.g., strong item association rules) found in transaction history 114.

In block 330, method 300 extracts not stolen K items patterns. In one example of block 330, market basket analysis algorithm 220 invokes rule generator 240 to generate NSKI 122 to include patterns 242 defined by support 222, confidence 224, and lift 226, that contains one or more of the items listed in MSKI 121. Thus, NSKI 122 includes patterns of items that may be scanned and are associated with items that may be stolen.

In block 340, method 300 defines suspect transaction classes. In one example of block 340, rule generator 240 processes one or more of support 222, confidence 224, lift 226, and NSKI 122 to determine a class-one 252 suspect transaction that occurs when current transaction 118 closely matches at least one pattern 242 of NSKI 122 and does not include any of MSKI 121. In another example of block 340, rule generator 240 processes one or more of support 222, confidence 224, lift 226, and NSKI 122 to determine a class-two 254 suspect transaction that occurs when current transaction 118 closely matches at least one pattern 242 of NSKI 122 and also includes at least MSKI threshold 206 number of the same item listed in MSKI 121. Accordingly, class-one 252 and class-two 254 suspect transactions define matches for different types of attempted theft during checkout using self-service POS terminal 104.

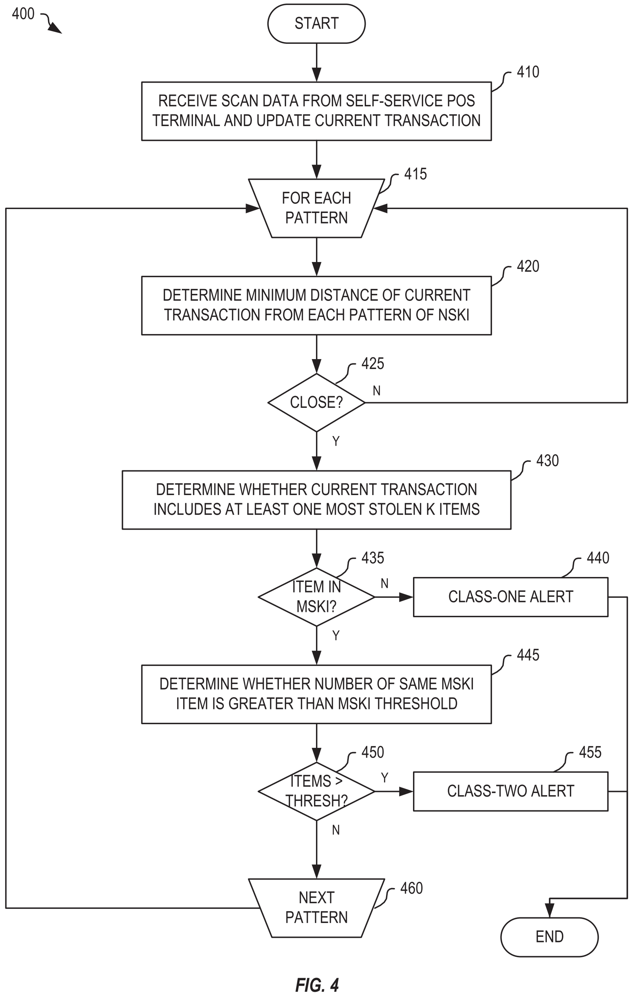

FIG. 4 is a flowchart illustrating one example method 400 for monitoring a current transaction for potential fraud, in embodiments. Method 400 is implemented by live transaction analyzer 120 of FIGs. 1 and 2, for example. FIGs. 1, 2 and 4 are described together with the following description. Live transaction analyzer 120 is invoked to receive scan data 105 for current transaction 118, or where current transaction 118 changes for any other reason.

In block 410, method 400 receives scan data from a self-service POS terminal and updated the current transaction. In one example of block 410, live transaction analyzer 120 receives scan data 105 from self-service POS terminal 104 as an item is scanned at self-service POS terminal 104 and adds the item to current transaction 118.

Block 415 is the start of a loop that repeats for each pattern 242 of NSKI 122.

In block 420, method 400 determines a minimum distance of the current transaction from each pattern of the NSKI. In one example of block 420, live transaction analyzer 120 determines a distance 250 of current transaction 118 from each pattern 242 of NSKI 122. In certain embodiments, distance 250 is determined by counting the items of the transaction in NSKI 122 that are not in current transaction 118. For example, where the transaction in NSKI 122 includes items A, B, C, D and current transaction 118 includes items A, B, and F, then distance 250 is determined as two, since items C and D are not included in current transaction 118. In another example, where the transaction in NSKI 122 includes items A, B, C, and D and current transaction 118 includes items A, K, L, M, N, O, and P, then distance 250 is determined as three, since items B, C, and D are not in current transaction 118. In another example, distance 250 may be determined as a count of differences (e.g., items in only one of the two transactions) between items of transactions of NSKI 122 and items of current transaction 118. However, distance 250 may be determined using other criteria without departing from the scope hereof. For example, distance 250 may be based on a length of current transaction 118 and/or transactions of NSKI 122.

Block 425 is a decision. If, in block 425, method 400 determines that the distance indicates that the current transaction is close to a pattern, method continues with block 430; otherwise, method 400 continues with block 415 where a next pattern 242 of NSKI 122 is selected. In one example of block 425, live transaction analyzer 120 compares distance 250 against a threshold distance 251 to determine whether current transaction 118 is close to pattern 242.

In block 430, method 400 determines whether the current transaction includes at least one most stolen K items. In one example of block 430, live transaction analyzer 120 determines whether current transaction 118 includes any items of MSKI 121. Block 435 is a decision. If, in block 435, method 400 determines that the current transaction includes at least one most stolen K items, method 400 continues with block 445; otherwise method 400 continues with block 440. In block 440, method 400 generates a class-one alert. Method 400 then terminates.

In block 445, method 400 determines whether a number of the same most stolen K item in the current transaction is at or above the MSKI threshold for the item. In one example of block 445, live transaction analyzer 120 determines that current transaction 118 includes a number of the same item listed in MSKI 121 that is equal to, or greater than, MSKI threshold 206 for that item.

Block 450 is a decision. If, in block 450, method 400 determines that the number of items is at or greater than the threshold for that item, method continues with block 455; otherwise, method 400 continues with block 460. In block 455, method 400 generates a class-two suspect transaction alert. In one example of block 455, live transaction analyzer 120 generates alert 150 corresponding to matching class-two 254.

Block 460 is the end of the loop starting at block 415. Accordingly, blocks 415 through 460 repeat for each pattern 242 of NSKI 122.

### Further Configurational Advantages

In certain embodiments, service 100 and methods 300 and 400 may be further enhanced to improve predictability of theft. For example, market basket analysis algorithm 220 may causes frequent itemset generator 230 to generate one or more of MSKI 121, MSKI threshold 206, support 222, confidence 224, and lift 226 for a current timeslot 260. For example, timeslot 260 may be set to weekdays eight AM through one PM, whereby frequent itemset generator 230 only includes transactions of transaction history 114 having a time within that period. Accordingly, service 100 is easily tuned to a particular time of day, and/or day of the week. Similarly, current timeslot 260 may refer to a season. In certain embodiments, frequent itemset generator 230 generates multiple sets of MSKI 121, MSKI threshold 206, support 222, confidence 224, and lift 226, one set for each period designated by current timeslot 260, whereby rule generator 240 generates a corresponding NSKI 122 and classes 124 for each timeslot. Accordingly, live transaction analyzer 120 selects a corresponding set of NSKI 122 and classes 124 based on a time of current transaction 118. Advantageously, service 100 thereby adjusts for changes in patterns of theft over different periods.

In certain embodiments, service 100 and methods 300 and 400 are further enhanced to improve alarm accuracy by using purchase sequences defined in transaction history 114. For example, a sequence flag 262 may control targeted rule generator 130 to identify a certain sequences of the same items in transactions of transaction history 114 where certain items are stolen more often. For example, shopping theft data 116 collected from positive cases of theft detected at post check-out controls may be used to identify transactional sequences that correspond to increased theft. For example, rule generator 240 may generate patterns 242 that define the sequence of scanned items from transaction history 114 that correspond to shopping theft data 116, whereby live transaction analyzer 120 matches the defined scanning sequence of current transaction 118 to each pattern 242 when determining distance 250.

In certain embodiments, service 100 and methods 300 and 400 are further enhanced to improve alarm accuracy based on a location of self-service POS terminal 104. For example, in a store having several self-service POS terminals 104, theft may occur more for a particular terminal, such as where that terminal is furthest from a monitoring desk, or differently oriented from other terminals, or in a position to receive outside sunlight at different times of the day from other terminals. Accordingly, a POS location flag 264 may cause targeted rule generator 130 to generate a set of NSKI 122 and classes 124 for each self-service POS terminal 104. Accordingly, live transaction analyzer 120 uses the appropriate set of NSKI 122 and classes 124 based on the identified self-service POS terminal 104 in scan data 105. Advantageously, where theft occurs less frequently at a certain terminal (e.g., the terminal nearest a monitoring desk), alerts are generated less frequently for that terminal.

Each of these different improvements may be included individually or included in any combination. Further, these improvement may be selected and adjusted for each retail store 102.

### Numerical Example

The following numerical examples illustrate operation of service 100 of FIG. 1. The data (including numbers of items supported, threshold levels, etc.) is overly simplified for clarity of illustration and should not be considered limiting in any way.

Table 1 Transaction History shows a set of six example transactions recorded at retail store 102. Each row, labelled t1 through t6, is a transaction and contains the number of items added to a customer's cart and then scanned.

**Table 1 Transaction History**

| | Flour Happy Mill | Tomatoes | Mozzarella Sticks | Yeast | Coca cola | Square eggs | Milk | Golden Saffron | Yummy Rice | Awesome Beer |
|---|---|---|---|---|---|---|---|---|---|---|
| t1 | 2 | 4 | 1 | 2 | 1 | 0 | 0 | 0 | 0 | 0 |
| t2 | 5 | 0 | 0 | 2 | 0 | 6 | 1 | 0 | 0 | 0 |
| t3 | 0 | 0 | 0 | 0 | 0 | 0 | 0 | 1 | 3 | 2 |
| t4 | 0 | 0 | 0 | 0 | 0 | 0 | 0 | 1 | 3 | 0 |
| t5 | 2 | 0 | 0 | 1 | 0 | 0 | 1 | 0 | 0 | 0 |
| t6 | 1 | 0 | 0 | 1 | 0 | 0 | 0 | 0 | 0 | 1 |

MSKI 121 may include: Flour Happy Mill with a corresponding MSKI threshold 206 of three, Awesome Beer with a corresponding MSKI threshold 206 of five, and Golden Saffron with a corresponding MSKI threshold 206 of one.

From this data, frequent itemset generator 230 generates support 222 as shown in Table 2 - Support that defines a frequency of purchase for each item.

**Table 2 - Support**

| | Support |
|---|---|
| Flour Happy Mill | 0,666666667 |
| Tomatoes | 0,166666667 |
| Mozzarella Sticks | 0,166666667 |
| Yeast | 0,666666667 |
| Coca cola | 0,166666667 |
| Square eggs | 0,166666667 |
| Milk | 0,333333333 |
| Golden Saffron | 0,333333333 |
| Yummy Rice | 0,333333333 |
| Awesome Beer | 0,333333333 |

By choosing and applying a threshold of 0.5 for normal items and 0.3 for most stolen items, the frequency table is reduced in size and shown in Table 3 Limited Support.

**Table 3 Limited Support**

| Support | |
|---|---|
| Flour Happy Mill | 0,666666667 |
| Yeast | 0,666666667 |
| Golden Saffron | 0,333333333 |
| Awesome Beer | 0,333333333 |

Frequent itemset generator 230 then generates confidence 224 to include all possible combinations of items from Table 3 Limited Support as shown in Table 4 - Confidence. In this example, pairs of items are selected where the order of selection is considered insignificant for this example.

**Table 4 - Confidence**

| | | |
|---|---|---|
| Flour Happy Mill | Yeast | 0,666667 |
| Flour Happy Mill | Golden Saffron | 0 |
| Flour Happy Mill | Awesome Beer | 0,166667 |
| Yeast | Golden Saffron | 0 |
| Yeast | Awesome Beer | 0,166667 |
| Golden Saffron | Awesome Beer | 0,166667 |

Applying thresholds to the values of Table 4 - Confidence results in a single row, as shown in Table 5 - Limited Confidence.

**Table 5 - Limited Confidence**

| | | |
|---|---|---|
| Flour Happy Mill | Yeast | 0,666667 |

Thus, this example results in a single pattern 242 that indicates that when the item "Yeast" is added to current transaction 118, it is highly probable (e.g., 67%) that "Flour Happy Mill" will also be added (and vice versa). Accordingly, where current transaction 118 include one of these items but not the other, the absence of the other item in current transaction 118 may indicate an attempt to steal the other item.

### Class-One Alert

Where current transaction 118 includes the items shown in Table 6 - Class-One Example Transaction, live transaction analyzer 120 generates alert 150 indicating the class-one alert, since the presence of "Yeast", combined with the absence of "Flour Happy Mill" is determined to be suspicious.

**Table 6 - Class-One Example Transaction**

| | |
|---|---|
| Yeast | 1 |
| Square Eggs | 2 |
| Tomatoes | 3 |
| Milk | 1 |

### Class-Two Alert

In the example transaction shown in Table 7 - Class-Two Example Transaction, live transaction analyzer 120 determines distance 250 as being short, and that the transaction includes items from MSKI 121. The presence of both the items of Yeast and Flour Happy Mill do not raise suspicion, however, the quantity of Awesome Beer is greater than the corresponding MSKI threshold 206 (five in this example), and therefore live transaction analyzer 120 generates alert 150 to indicate class-two 254 suspicion.

**Table 7 - Class-Two Example Transaction**

| | |
|---|---|
| Awesome beer | 7 |
| Yeast | 1 |
| Flour Happy Mill | 1 |
| Coca Cola | 1 |
| Square eggs | 1 |

### Unsuspicious Transaction

Where current transaction 118 includes the items shown in Table 8 - Transaction, live transaction analyzer 120 does not generate alert 150.

**Table 8 - Transaction**

| | |
|---|---|
| Flour Happy Mill | 1 |
| Tomatoes | 3 |
| Mozzarella Sticks | 1 |
| Yeast | 2 |

In the example of Table 8 - Transaction, both of the items "Yeast" and "Flour Happy Mill" are present and no MSKI threshold 206 is violated for any of the items. Accordingly, live transaction analyzer 120 does not determine this transaction as suspicious and does not generate alert 150.

### Example Implementation

FIGs. 5A, 5B, 6A, 6B, 7A, 7B, 8A, and 8B show one example implementation of service 100 of FIG. 1 using the Python programming language with the "pandas", "numpy", and "mlxtend" libraries and with example output, in embodiments. The data in these example matches the example data shown above. The number of lines of Python code is very small since the *Apriori* algorithm is provided by the mlxtend library. Accordingly, implementation of service 100 of FIG. 1 is relatively simple.

FIG. 5A shows example Python code 500 for loading the needed libraries and importing example data from an excel spreadsheet named "basket.xlsx" into a DataFrame called "df". DataFrame "df' may represent transaction history 114 of FIG. 1. FIG. 5B shows example output data 530 from DataFrame "df". In this example, DataFrame "df" includes a history of six transactions.

FIG. 6A shows example Python code 600 for generating frequency data for DataFrame "d1". Frequency data for DataFrame "df" may represent support 222 of FIG. 2. FIG. 6B shows example data output 630 of the frequency data generated by Python code 600.

FIG. 7A shows example Python code 700 for creating a DataFrame "frequency _patterns" using the *Apriori* algorithm from the "mlxtend" library on the DataFrame "df". DataFrame "frequency_patterns" may represent confidence 224 of FIG. 2. FIG. 7B shows example output data 730 of DataFrame "frequency_patterns".

FIG. 8A shows example Python code 800 for generating association rules from the DataFrame "frequency_patterns" of FIGs. 7A and 7B. FIG. 8B shows example output data 830 of the association rules generates by Python code 800 of FIG. 8A.

### Machine Learning Implementation

FIG. 9 is a schematic diagram illustrating one example machine-learning service 900 to evaluate transactions executed at self-server point-of-sale (POS) terminals located at retail stores with improved ability to identify potential shoplifting incidents, in embodiments. Service 900 may be provided via the cloud, or may be implemented in one or both of a remote server and an on-site server without departing from the scope hereof. In one example, service 900 is implemented by a server of a retail store chain. In some embodiments, one or more acts of the service 900, such as those performed during a live transaction, may be provided locally on-device, such as via machine learning modules executed on the scanner itself or connected POS system of the POS terminal. An example of such a scanner capable of such local processing is described in U.S. Patent 12,141,648, issued November 12, 2024, and entitled "Fixed retail scanner with on-board artificial intelligence (AI) accelerator module and related methods," the disclosure of which is incorporated by reference herein in its entirety. In some embodiments, acts performed the service 900 may be provided via any combination of the devices described herein.

Service 900 may use algorithms similar to service 100 of FIG. 1, whereby historical transaction data, stored in a database 910, is processed to determine statistical information of transactional activity 918 at a particular retail store. Service 900 includes a convolutional neural network 960 (e.g., CNN 960 - or any other type of machine-learning technology), and a database 910 for storing transaction history (e.g., similar to transaction history 114) and shopping theft data (e.g., similar to shopping theft data 116). Database 910 may store data from one retail store or from multiple retail stores. For example, data may be collected from a plurality of commonly owned retail stores. Advantageously, using data from multiple stores allows service 900 to benefit from a broader range of data from which to learn. In this embodiment, the transaction history and shopping theft data stored in database 910 includes metadata that distinguishes between rechecked transactions (e.g., a post-checkout control triggered according to any criteria, including at random) and non-rechecked transactions. Where the transaction is rechecked, the transaction, and/or shopping theft data associated with the transaction, includes metadata that defines any errors that were detected with the transaction and may include additional details of the errors. For example, where a customer is subjected to post-checkout control and the customer's basked is found to include an item that was not scanned, the metadata may indicate which unscanned item was found, which self-service POS was used, etc. Further, where the post-checkout control was triggered by alert 950 (e.g., generated by service 900) the metadata may further indicate whether the item in error was correctly or incorrectly predicted by service 900. For example, the metadata may indicate whether an item predicted to be stolen matches the actual item found to be in error.

Metadata may be linked to the transactional activity 918 (e.g., the receipt) or the retail store. For example, the metadata may include one or more of: a timestamp of the transaction, a customer identifier of the customer performing the self-service checkout, location information of the self-service POS terminal and/or customer in the retail store, a set of most stolen items for the retail store, a set of most valuable items, and so on.

Service 900 may implement data exploration on the available data (e.g., transaction history of one or more retail stores), using CNN 960 to match the unsupervised learning paradigm (e.g., clustering, principal component analysis - PCA, *Apriori* or similar algorithms) to lower, when possible, the dimensionality of the problem to extract meaningful features and/or patterns that reduce noise (e.g., to generate alert 950 with higher accuracy and lower variance). Service 900 may also include supervised-learning algorithms 970 for supervised learning to process output of CNN 960 and historical data and metadata from database 910 CNN 960 to generate alert 950 that indicated when a current transaction (e.g., a current sale including online transaction from smart devices 904) to generate a risk (e.g., a probability) of the current transaction being fraudulent.

In one example of operation, CNN 960 processes transactional activity 918 and generates a prediction of the loss risk level in the transaction (risk class). Supervised-learning algorithms 970 uses a supervised learning paradigm to improve prediction of risk for transactional activity 918. For example, supervised-learning algorithms 970 use labeled data for training, cross-validation and testing. Supervised-learning algorithms 970 may implement random forests, SVM, naive Bayes filters, classification trees, neural networks or any other suitable machine learning model.

Alert 950 may represent one or more of alarms, other actions, and feedback to store staff, and/or may represent output to other local/remote software systems.

Changes may be made in the above methods and systems without departing from the scope hereof. It should thus be noted that the matter contained in the above description or shown in the accompanying drawings should be interpreted as illustrative and not in a limiting sense. The following claims are intended to cover all generic and specific features described herein, as well as all statements of the scope of the present method and system, which, as a matter of language, might be said to fall therebetween.

## Claims

1. A method to evaluate transactions executed at self-service point-of-sale (POS) terminals located at retail stores with improved ability to identify potential shoplifting incidents, comprising:
determining most stolen K items (MSKI) from a transaction history and shopping theft data of the retail store, where K is an integer value greater than one;
generating a set of not stolen K items (NSKI) based on market basket analysis of the transaction history;
defining suspect transaction classes based on the MSKI and the NSKI; and
generating an alert for a current transaction at the retail store when items in the current transaction match one of the suspect transaction classes.

2. The method of claim 1, wherein the acts of determining MSKI, generating the set of NSKI, and defining suspect transaction classes are implemented for each of a plurality of timeslots, wherein the act of generating the alert uses the MSKI and the NSKI of the timeslot associated with a time of the current transaction.

3. The method of claim 1 or 2, wherein generating the set of NSKI comprises performing a market basket analysis algorithm on the transaction history to determine the NSKI.

4. The method of claim 3, wherein generating the set of NSKI comprises extracting patterns of associated items that include at least one item of MSKI,
preferably wherein the acts of generating the set of NSKI and defining suspect transaction classes comprise extracting the patterns based on a scan sequence of items defined in the transaction history and corresponding shopping theft data.

5. The method of any of claims 3-4, wherein the market basket analysis algorithm limits the items examined to the K most stolen items.

6. The method of any of the previous claims, wherein the acts of determining MSKI, generating the set of NSKI, and defining suspect transaction classes are implemented for each of a plurality of point-of-sale terminal locations with the retail store, wherein the act of generating the alert uses the MSKI and the NSKI of the point-of-sale terminal location associated with the current transaction.

7. The method of any of the previous claims, wherein generating the alert comprises:
determining a minimum distance between the current transaction and each pattern of NSKI;
generating a first class alert when the minimum distance is less than a threshold distance value and the current transaction does not include any item of the MSKI; and
generating a second class alert when the distance is below the threshold value and the current transaction includes at least one item of the MSKI with a multiplicity greater than a corresponding MSKI threshold.

8. The method of claim 7, further comprising determining the current transaction is not suspicious when the distance is greater than the threshold distance and/or wherein the generation of either the first class alert or the second class alert classify the current transaction as suspicious.

9. The method of any of the previous claims, further comprising repeating at intervals the acts of determining MSKI, generating the set of NSKI, and defining suspect transaction classes or wherein the acts of determining MSKI, generating the set of NSKI, and defining suspect transaction classes are implemented as a batch process.

10. The method of any of the previous claims, further comprising sending the alert to activate a device at the retail store.

11. A system to evaluate transactions executed at self-server point-of-sale (POS) terminals located at retail stores with improved ability to identify potential shoplifting incidents, comprising:
a database for storing a transaction history and shopping theft data of the retail store;
a self-shopping POS terminal located at the retail store; and
a service implemented by a processor and memory storing machine-readable instructions that when executed by the processor cause the service to:
determine most stolen K items (MSKI) from the transaction history and the shopping theft data, where K is an integer value greater than one;
generate a set of not stolen K items (NSKI) based on market basket analysis of the transaction history;
define suspect transaction classes based on the MSKI and the NSKI; and
generate an alert for a current transaction at the retail store when items in the current transaction of the self-shopping POS terminal match one of the suspect transaction classes.

12. The system of claim 11, further comprising machine-readable instructions that when executed by the processor cause the service to determine the MSKI, generate the NSKI, and define the suspect transaction classes for each of a plurality of timeslots, wherein the machine-readable instructions for generating the alert uses the MSKI and the NSKI of the timeslot associated with a time of the current transaction.

13. The system of claim 11 or 12, further comprising machine-readable instructions that when executed by the processor cause the service to perform a market basket analysis algorithm on the transaction history to determine the NSKI.

14. The system of claim 13, further comprising machine-readable instructions that when executed by the processor cause the service to extract patterns of associated items that include at least one item of MSKI to define the NSKI,
preferably further comprising machine-readable instructions that when executed by the processor cause the service to extract the patterns based on a scan sequence of items defined in the transaction history and corresponding shopping theft data to define the NSKI.

15. The system of any of claims 11-14, wherein the service is implemented in a cloud-based system.
